# EUROPÄISCHE PATENTSCHRIFT

(11) **EP 0 528 165 B1**
(45) Veröffentlichungstag und Bekanntmachung des Hinweises auf die Patenterteilung: **25.09.1996**
(21) Anmeldenummer: 92111774.3
(22) Anmeldetag: 10.07.1992
(51) Int. Cl.: F28D 20/00, F25B 35/04, F24J 2/48

(54) **Wärmetauscher für den Wärmetausch von gasförmigen Heizmedien und Feststoffen**
Heat exchanger for heat exchange between gaseous heat exchange media and solids
Echangeur de chaleur pour l'échange de chaleur entre fluides caloporteurs gazeux et corps solides

(30) Priorität: 16.08.1991 DE 9110098 U
(43) Veröffentlichungstag der Anmeldung: 24.02.1993
(73) Patentinhaber: Färber, Wilfried, D-77704 Oberkirch (DE)
(72) Erfinder: Färber, Wilfried, D-77704 Oberkirch (DE)
(74) Vertreter: Zipse & Habersack

(56) Entgegenhaltungen:
- CH-A- 195 739
- DE-C- 577 709
- DE-C- 640 323
- DE-C- 643 267

## Beschreibung

Die Erfindung betrifft einen Wärmetauscher für den Wärmetausch von gasförmigen Heizmedien mit kristallinen adsorptions- und desorptionsfähigen Feststoffen, z. B. Zeolith od. dgl. mit in einem Behälter angeordneten, vom Heizmedium durchströmten kanälen mit Tauscherflächen. Die Erfindung betrifft ferner einen Wärmetauscher für den Wärmetausch von auf Tauscherflächen auftreffenden Flächenstrahlungen von Wärmestrahlungsquellen mit kristallinen adsorptions- und desorptionsfähige Feststoffen, z. B. Zeolith od. dgl.

Es sind schon die verschiedensten Wärmetauscher bekanntgeworden, die alle mehr oder weniger mit Kühlmittelrohren arbeiten, an denen Metallflächen oder Rippen zur Aufnahme der Wärme und zu ihrer Ableitung ins Kühlmedium angeordnet sind.

Der vorliegenden Erfindung liegt die Aufgabe zugrunde, einen Wärmetauscher der eingangs genannten Art zu schaffen, der sich sowohl für den Wärmetausch von gasförmigen Heizmedien mit kristallinen adsorptions- und desorptionsfähigen Stoffen, z. B. Zeolith, als auch für den Wärmetausch von durch Strahlungswärme erzeugter Wärme mit den genannten Stoffen eignet, wobei der Wärmetauscher einen vielfältigen und optimalen Einsatz der Sorptionstechnik auf der Basis der Feststoff-Gas-Paarung ermöglicht.

Die Lösung der gestellten Aufgabe erfolgt durch einen Wärmetauscher der eingangs genannten Art, welcher dadurch gekennzeichnet ist, daß eine heiz- und kühlseitige, V-förmige Tauscherfläche mit einem zwischen den Schenkeln des V mit Abstand angeordneten, V-förmigen, gas- oder flüssigkeitsdurchlässigen Trennblech, z. B. Lochblech, einen Kanal zur Aufnahme des genannten Feststoffes bildet, und daß zwischen den Tauscherflächen die Heizmedienkanäle angeordnet sind, wobei der zwischen dem V-förmigen Trennblech entstehende Raum als Dampfkanal dient. Dieser Raum mündet in eine anschließende Kondensationskammer, die durch eine Kondensationsfläche mit anschließendem Kühlmittelkanal begrenzt wird.

Mit dem Wärmetauscher gemäß der Erfindung wird der wesentliche Vorteil erreicht, daß über die Tauscherflächen sich die genannten Festkörper während der Desorptionsphase mit bekannten Heizenergiequellen trocknen und ausdampfen lassen. Der austretende Dampf wird dann unmittelbar über den anschließenden Dampfkanal an die Kondensationsfläche geleitet, dort in Kondensat umgewandelt und in den Kondensationssammler geleitet. Unterstützend für diesen Vorgang kann über den Kühlmittelkanal Kühlmedium geleitet werden. Diese besondere Form des erfindungsgemäßen Wärmetauschers erlaubt mehrere, je nach Einsatzzwecken geeignete Tauscherkonstruktionen, z. B.
- als Wärmetauscher zur Wärmeaufnahme aus Flächenstrahlungen,
- gekrümmte, konvexe oder konkave Formen, insbesondere für die Sonnenenergieeinspeisung,
- kreisförmig bzw. zylinderförmig angeordnet als V-Rippenrohrtauscher für alle gasförmigen Heizmedien, insbesondere für alle Abgase aus Verbrennungskraftmaschinen.

Demgemäß besteht eine besondere Ausbildung des Wärmetauschers gemäß der Erfindung darin, daß bei einem Abgaswärmetauscher mehrere V-förmige Tauscherflächen aus Edelstahlblech sternförmig mit der Spitze um ein Verdrängungsrohr innerhalb eines Hohlzylinders derart angeordnet sind, daß zwischen den Tauscherflächen die radial angeordneten Heizmedienkanäle vom Heizmedieneintritt zum -austritt in axialer Richtung verlaufen und wobei zwischen den V-förmigen Tauscherflächen die sternförmig verlaufenden Lochtrennbleche angeordnet sind und die Dampfkanäle radial nach außen in die umlaufende Kondensationskammer münden.

Dadurch entsteht der besondere Vorteil, daß die WärmeDampf-Kondensat-Flußrichtung sinngemäß entsprechend dem Systemablauf verläuft, da die Kondensationsseite der Heizseite abgewandt ist, was mit keinem der mit Röhren aufgebauten Wärmetauscher erreicht wird.

Der erfindungsgemäße Wärmetauscher kann ferner als Flächenwärmetauscher ausgebildet sein. Diese Ausführungsform besteht darin, daß bei dem Flächenwärmetauscher zur Wärmeaufnahme aus Flächenstrahlungen mehrere V-förmige, miteinander verbundene Tauscherflächen mit ihren Spitzen gegen die Wärmestrahlungsquellen auf einer ebenen, konkav gekrümmten oder konvex gekrümmten Fläche angeordnet sind, daß zwischen den V-förmigen Tauscherflächen im Abstand davon miteinander verbundene, V-förmige Lochbleche zur Bildung von Feststoffkanälen zwischen den Tauscherflächen und den Lochblechen nebeneinander angeordnet sind,

wobei zwischen den Lochblechen die Dampfkanäle in eine ebene, konvex gekrümmte oder konkav gekrümmte Kondensatkammer münden, die durch eine ebene, konvex gekrümmte oder konkav gekrümmte Kondensationsfläche begrenzt wird, die von einem Kühlmittelkanal umgeben ist.

Auch bei den letztgenannten, flächigen Ausführungsformen ist die Kondensationsseite der Heizseite abgewandt, wodurch ein wesentlich besserer Systemablauf ermöglicht wird.

In bestimmten Anwendungsfällen läßt sich darüber hinaus die Heizfläche, insbesondere bei der kreisrunden, zylinderförmigen Ausführung, problemlos im Wechsel mit den Heizgasen und den Kühlgasen für schnellere Zyklen beaufschlagen. Bei dem Wärmetauscher gemäß der Erfindung kann z. B. die bekannte "Zeolith-Sorptions-Kältetechnik" angebunden werden, so daß die Möglichkeit geschaffen wird, bisherige Überschußwärme, z. B. von Abgasen bei Kraft-Wärmekopplungsanlagen oder Abgaswärme aus z. B. industriellen Backöfen od. dgl., zur Kälteerzeugung zu verwenden.

Anhand der Zeichnungen soll am Beispiel bevorzugter Ausführungsformen der Wärmetauscher gemäß der Erfindung näher erläutert werden.

In den Zeichnungen zeigt
- Fig. 1: einen Längsschnitt durch einen Gas-Feststoff-Wärmetauscher gemäß der Erfindung.
- Fig. 2: zeigt einen Querschnitt durch den Wärmetauscher gemäß Fig. 1.
- Fig. 3: zeigt eine vergrößerte Detailansicht eines Ausschnittes entsprechend Fig. 2.
- Fig. 4: zeigt in Prinzip einen Schnitt durch einen flächenhaften Wärmetauscher gemäß der Erindung.
- Fig. 5: zeigt eine abgewandelte Ausführungsform des Wärmetauschers gemäß den Figuren 1 und 2.
- Fig. 6: zeigt einen flächenhaften Wärmetauscher mit einer konkaven Krümmung.

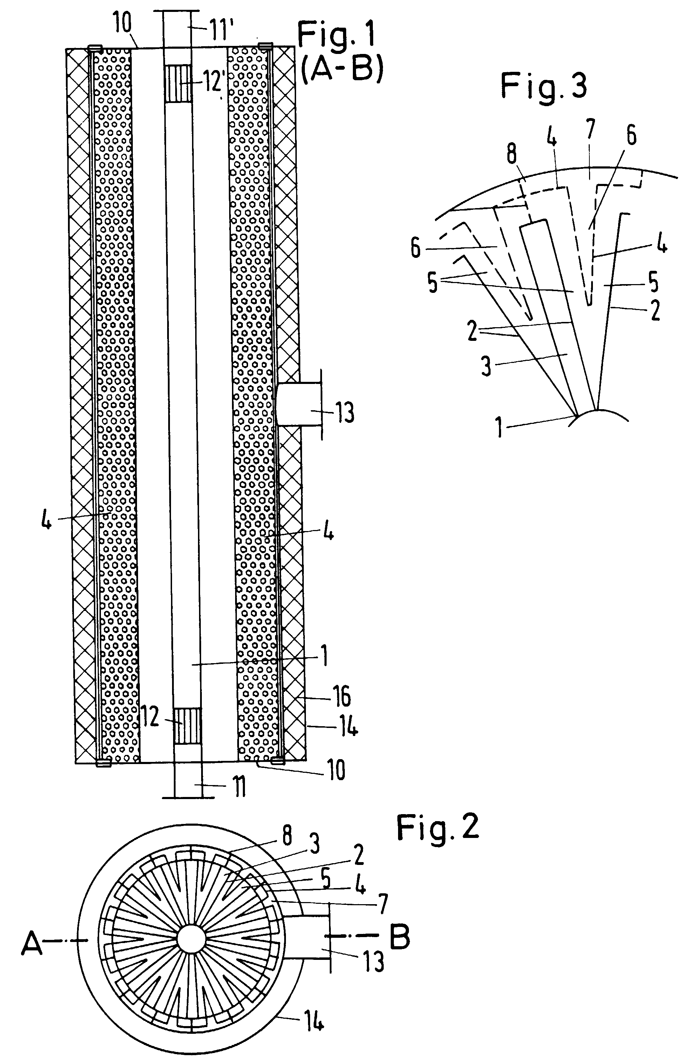

Wie sich aus den Figuren 1, 2 und 3 ergibt, besteht der Wärmetauscher gemäß der Erfindung aus einem Verdrängungsrohr 1, auf dem radial und sternförmig V-förmige Tauscherflächen 2, z. B. aus Edelstahl, mit der Spitze gegen das Verdrängungsrohr 1 gerichtet angeordnet sind. Durch diese Anordnung entstehen radial um das Verdrängungsrohr 1 Heizmedienkanäle 3, die axial durch die gesamte, hohlzylinderförmige Anordnung verlaufen.

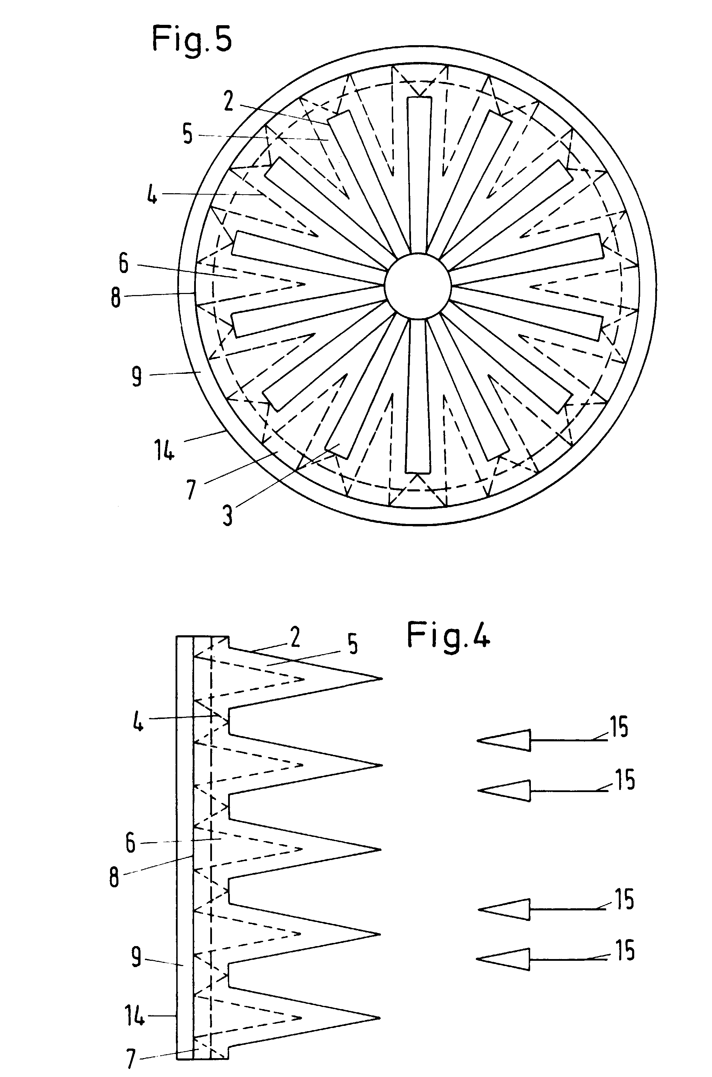

Zwischen den V-förmigen Tauscherflächen 2 sind im Abstand davon V-förmige Lochbleche 4 als Trennbleche angeordnet, wodurch ebenfalls über den gesamten Umfang verteilt Kanäle 5 zur Aufnahme von kristallinen adsorptions- und desorptionsfähigen Feststoffen, wie z. B. Zeolithe od. dgl., entstehen. Gleichzeitig entstehen V-förmige Dampfkanäle 6 zwischen den Lochblechen 4. Diese Dampfkanäle münden in eine umlaufende Kammer 7 als Dampfkammer oder als Kondensatsammler. Bei einem Kondensatsammler wird dieser durch eine Kondensationsfläche 8 begrenzt, an die sich umlaufen ein Küblmittelkanal 9 anschließt (Fig. 5). Die gesamte Anordnung ist durch zwei stirnseitige Flanschdeckel 10 abgeschlossen.

Die Funktion des Wärmetauschers gemäß der Erfindung ist wie folgt: Der Tauscher wird mit heißen Gasen, z. B. Abgasen von Verbrennungsmaschinen oder Heizkesseln, beim Heizgaseintritt 11 angefahren. Am Beginn des Verdrängungsrohres ist dieses bei 12 unterbrochen, so daß durch die einzelnen, V-förmigen Tauscherflächen Durchbrüche in die Heizmedienkanäle 3 entstehen, wodurch die Gase in die Heizmittelkanäle 3 umgelenkt werden. Dabei strömen sie an den V-förmigen Tauscherflächen vorbei und geben ihre Wärme an das Feststoffmaterial im Feststoffkanal 5 ab. Die Gase strömen dann durch weitere Durchbrüche 12' an den Ausgang 11' des Verdrängungsrohres. Durch das Aufheizen der Tauscherflächen 2 wird z. B. der Wasserdampf aus den Feststoffen herausgetrieben (Desorption), und die Feststoffe werden getrocknet. Der Wasserdampf wird dann durch die Lochbleche 4 in die davorliegenden Dampfkanäle 6 umgeleitet und entweder direkt dem Dampfanschlußstutzen 13 zugeführt oder an der Kondensationsfläche 8 kondensiert und als Flüssigkeit abgeleitet.

Ein weiteres Mantelblech 14 umschließt den ganzen Tauscher. Innerhalb des Mantelbleches kann noch eine Wärmeisolationsschicht 16 angeordnet werden. Die Flanschdeckel 10 verschließen die Heizkanäle 3, so daß sie jederzeit zu Reinigungszwecken wieder geöffnet werden können.

In Fig. 4 ist im Prinzip im Schnitt eine weitere Ausführungsform des Wärmetauschers gemäß der Erfindung dargestellt. Dort sind in ebener Anordnung mehrere V-förmige Tauscherflächen 2 miteinander verbunden. Zwischen den V-förmigen Tauscherflächen 2 sind im Abstand davon Lochbleche 4 angeordnet, die einen Kanal 5 zur Aufnahme der genannten Feststoffe bilden. Zwischen den V-förmigen Lochblechen entstehen Dampfkanäle 6, die in eine Kondensationskammer 7 münden, die von einer Kondensationsfläche 8 begrenzt wird. Hinter dieser Kondensationsfläche ist ein Kühlmittelkanal 9 gebildet, der von einem äußeren Mantelblech begrenzt wird. Dieser Wärmetauscher eignet sich besonders für den Wärmetausch von einer Wärmestrahlung, die bei 15 durch Pfeile angezeigt ist.

In Fig. 5 ist eine ähnliche Ausführungsform wie in Fig. 2 dargestellt, wobei jedoch die Lochbleche nochmals V-förmig gegen die Verbindung zweier Tauscherflächen 2 gerichtet ist, wobei die Kondensationsfläche 8 von einen Kühlmittelkanal 9 umgeben wird, der von einem Metallblech 14 begrenzt ist.

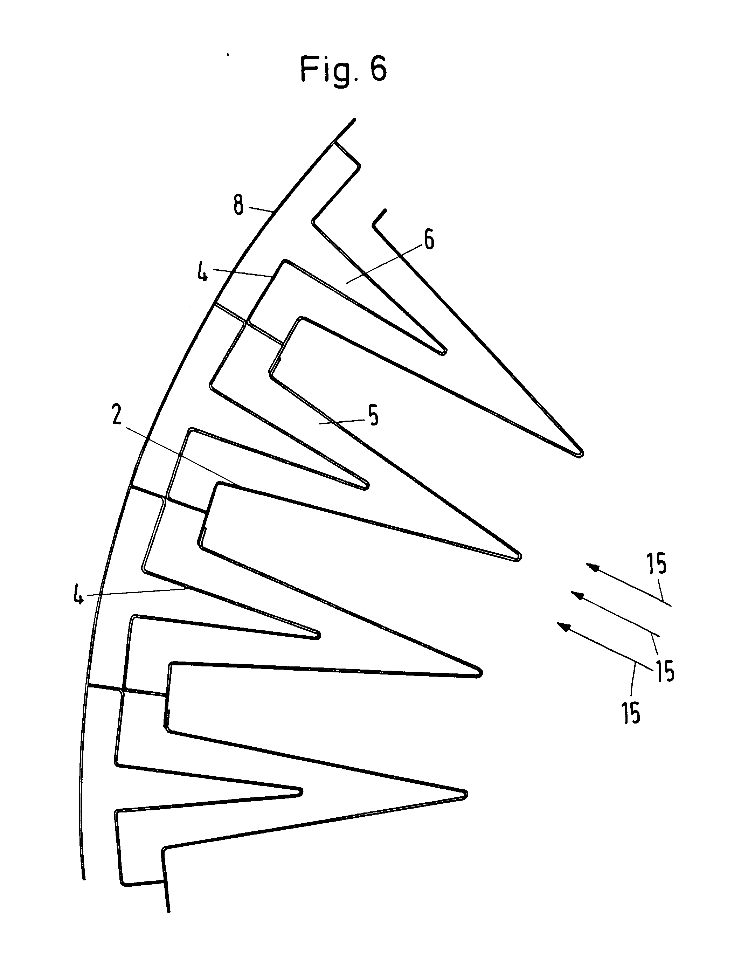

In Fig. 6 ist eine Wärmetauscheranordnung gezeigt, die anstelle einer ebenen Flächenausrichtung konkav gekrümmt ist. Diese Anordnung kann insbesondere zur Aufnahme von Solarenergie zweckmäßig sein, wobei die Wärmestrahlungsenergie in Richtung der Pfeile 15 der Wärmetauscheranordnung zugefügrt wird.

Die Vorteile des erfindungsgemäßen Tauschers sind folgende:
- Die besondere Form der Tauscherflächen erlaubt einen vielfältigen und optimalen Einsatz der Sorptionstechnik auf der Basis Fest stoff-Gas-Paarung.
- In jedem Anwendungsfall verläuft die Wärme-Dampf-Kondensat-Flußrichtung sinngemäß entsprechend dem Systemablauf.
- Sowohl bei der flächenmäßigen als auch bei der runden Ausführungsform des Wärmetauschers ist die Kondensationsseite der Heizseite abgewandt.
- Der Wärmetauscher kann in einfacher Weise an die bekannte Zeolith-Sorptions-Kältetechnik angebunden werden.
- Die Heizfläche läßt sich darüber hinaus in bestimmten Anwendungsfällen, insbesondere in der runden Ausführung, problemlos im Wechsel mit den Heizgasen und den Kühlgasen für schnellere Zyklen beaufschlagen.
- Der Wärmetauscher gemäß der Erfindung ermöglicht die Kombination der speziell geformten und dadurch stützend wirkenden, gelochten Trennbleche zur Aufnahme von Druckunterschieden bei der Betriebsart im Vakuum.
- Der Aufbau des Wärmetauschers ist fertigungsfreundlich und erlaubt den Einsatz unterschiedlicher Materialien, wodurch der Tauscher für alle möglichen Medien hergestellt werden kann.
- Der Wärmetauscher eignet sich für Anwendungsfälle in der BHKW-Technik, hier besonders für Abgas-Wärmetausch.
- Der Wärmetauscher eignet sich für die Anwendung in der Solartechnik.
- Der Wärmetauscher eignet sich für die Anwendung im Bereich der Trocknung (Getreide, Reis, Kaffee od. dgl.).

## Patentansprüche

1. Wärmetauscher für den Wärmetausch von gasförmigen Heizmedien mit kristallinen adsorptions- und desorptionsfähigen Feststoffen, z. B. Zeolith od. dgl., mit in einem Behälter angeordneten, vom Heizmedium durchströmten Kanälen mit Tauscherflächen, dadurch gekennzeichnet, daß eine heiz- und kühlseitige, V-förmige Tauscherfläche (2) mit einem zwischen den Schenkeln des V mit Abstand angeordneten, V-förmigen, gas- oder flüssigkeitsdurchlässigen Trennblech (4), z. B. Lochblech, einen Kanal (5) zur Aufnahme des genannten Feststoffes bildet, und daß zwischen den Tauscherflächen (2) die Heizmedienkanäle (3) angeordnet sind, wobei der zwischen dem V-förmigen Trennblech (4) entstehende Raum als Dampfkanal (6) dient, der in eine anschließende Kondensationskammer (7) mündet, die durch eine Kondensationsfläche (8) mit anschließendem Kühlmittelkanal (9) begrenzt wird.

2. Wärmetauscher nach Anspruch 1, **dadurch gekennzeichnet**, daß bei einem Abgaswärmetauscher mehrere V-förmige Tauscherflächen (2) aus Edelstahlblech sternförmig mit der Spitze um ein Verdrängungsrohr (1) innerhalb eines Hohlzylinders derart angeordnet sind, daß zwischen den Tauscherflächen (2) die radial angeordneten Heizmedienkanäle (3) vom Heizmedieneintritt (11) zum -austritt in axialer Richtung verlaufen, wobei zwischen den V-förmigen Tauscherflächen (2) die sternförmig verlaufenden Lochtrennbleche (4) angeordnet sind und die Dampfkanäle radial nach außen in die umlaufende Kondensationskammer (7) münden.

3. Wärmetauscher für den Wärmetausch von auf Tauscherflächen auftreffenden Flächenstrahlungen von Wärmestrahlungsquellen mit kristallinen adsorptions- und desorptionsfähigen Feststoffen, z. B. Zeolith od. dgl., **dadurch gekennzeichnet**, daß mehrere V-förmige, miteinander verbundene Tauscherflächen (2) mit ihren Spitzen gejen die Wärmestrahlungsquellen (15) auf einer ebenen, konkav gekrümmten oder konvex gekrümmten Fläche angeordnet sind, daß zwischen den V-förmigen Tauscherflächen (2) im Abstand davon miteinander verbundene, V-förmige Lochbleche (4) zur Bildung von Feststoffkanälen (5) zwischen den Tauscherflächen und den Lochblechen (4) nebeneinander angeordnet sind, wobei zwischen den Lochblechen die Dampfkanäle (6) in eine ebene, konkav gekrümmte oder konvex gekrümmte Kondensationskammer (7) münden, die durch eine ebene, konkav gekrümmte oder konvex gekrümmte Kondensationsfläche (8) begrenzt wird, die von einem Kühlmittelkanal (9) umgeben ist.

## Claims

1. Heat exchanger for heat exchange between gaseous heat exchange media and crystalline solids with good absorption and desorption capacities, e.g. zeolite or the like, with channels having exchanger surfaces, through which the heating medium flows, arranged in a container, characterised in that a V-shaped exchanger surface (2) having a hot and a cold side with a V-shaped gas-or liquid-permeable separating panel (4), e.g. perforated sheet, arranged spaced between the legs of the V, forms a channel (5) to receive said solid and that the heat media channels (3) are arranged between the exchanger surfaces (2), whereby the space formed between the V-shaped separating panel (4) serves as a steam channel (6) which opens out into a connected condensation chamber (7) which is limited by a condensation surface (8) with connected coolant passage (9).

2. Heat exchanger according to Claim 1, characterised in that with an exhaust gas heat exchanger several V-shaped exchanger surfaces (2) made from stainless steel sheet are arranged in a star-configuration with the point around a displacement pipe (1) inside a hollow cylinder in such a way that the radially arranged heat media channels (3) run from the heat media inlet (11) to the outlet in an axial direction between the exchanger surfaces (2), whereby the star-shaped perforated panels (4) are arranged between the V-shaped exchanger surfaces (2) and the steam channels open out radially into the surrounding condensation chamber (7).

3. Heat exchanger for heat exchange between radiation from heat radiating sources impinging on exchanger surfaces to crystalline solids with good absorption and desorption capacities, e.g. zeolite or the like, characterised in that several V-shaped exchanger surfaces connected with each other (2) are arranged on an even, concavely or convexly curved surface with their points towards the heat radiating sources (15), that between the V-shaped exchanger surfaces (2) spaced from these V-shaped perforated panels (4) connected to each other are arranged next to each other between the exchanger surfaces and the perforated panels (4) to form channels (5) for the solid substances, whereby the steam channels (6) open out between the perforated panels into an even, concavely curved or convexly curved condensation chamber (7) which is limited by an even, concavely curved or convexly curved condensation surface (8), which is surrounded by a coolant channel 9.

## Revendications

1. Echangeur de chaleur pour l'échange thermique entre des fluides gazeux de chauffage et des substances solides cristallines aptes à l'adsorption et à la désorption, comme par exemple une zéolithe ou substance similaire, comportant des canaux à surfaces échangeuses qui sont disposés dans un conteneur et sont parcourus par le fluide de chauffage, caractérisé par le fait qu'une surface échangeuse (2) configurée en V, située côté chauffage et côté refroidissement forme, avec une tôle séparatrice (4), par exemple une tôle perforée conformée en V, interposée à distance entre les branches du V et perméable aux gaz ou aux liquides, un canal (5) conçu pour recevoir la substance solide précitée ; et par le fait que les canaux (3) à fluide de chauffage se trouvent entre les surfaces échangeuses (2), l'espace engendré entre la tôle séparatrice (4) conformée en V remplissant la fonction d'un canal (6) à vapeur qui débouche dans une chambre adjacente de condensation (7), délimitée par une surface de condensation (8) à laquelle un canal (9) à fluide de refroidissement est attenant.

2. Echangeur de chaleur selon la revendication 1, caractérisé par le fait que, dans un échangeur de chaleur pour gaz d'échappement, plusieurs surfaces échangeuses (2) en une tôle d'acier fin, configurées en V et dont la pointe entoure un tube de refoulement (1), sont agencées en étoile, à l'intérieur d'un cylindre creux, de telle sorte que les canaux (3) à fluide de chauffage, disposés radialement, s'étendent dans le sens axial entre les surfaces échangeuses (2), de l'entrée (11) jusqu'à la sortie du fluide de chauffage, les tôles séparatrices perforées (4), s'étendant en étoile, étant interposées entre les surfaces échangeuses (2) configurées en V, et les canaux à vapeur débouchant, radialement vers l'extérieur, dans la chambre périphérique de condensation (7).

3. Echangeur de chaleur pour l'échange thermique entre des rayonnements aplatis, provenant de sources de rayonnements calorifiques et incidant sur des surfaces échangeuses, et des substances solides cristallines aptes à l'adsorption et à la désorption, comme par exemple une zéolithe ou une substance similaire, caractérisé par le fait que plusieurs surfaces échangeuses (2) configurées en V et reliées les unes aux autres, dont les pointes sont orientées vers les sources (15) de rayonnements calorifiques, sont disposées sur une surface plane à courbure concave ou à courbure convexe ; et par le fait que des tôles perforées (4) conformées en V, reliées les unes aux autres et interposées entre les surfaces échangeuses (2) configurées en V, à distance de ces dernières, sont agencées en juxtaposition pour former des canaux (5) à substances solides entre les surfaces échangeuses et les tôles perforées (4), les canaux (6) à vapeur débouchant, entre les tôles perforées, dans une chambre de condensation (7) plane à courbure concave ou à courbure convexe, délimitée par une surface plane de condensation (8) à courbure concave ou à courbure convexe, qui est entourée par un canal (9) à fluide de refroidissement.
